(19) Europäisches Patentamt / European Patent Office / Office européen des brevets

(11) **EP 4 730 449 A1**

(12) **EUROPEAN PATENT APPLICATION**

(43) Date of publication:
**22.04.2026 Bulletin 2026/17**

(21) Application number: **24306715.4**

(22) Date of filing: **17.10.2024**

(51) International Patent Classification (IPC):
*H01M 8/04186* (2016.01)    *H01M 8/18* (2006.01)
*H01M 8/20* (2006.01)

(52) Cooperative Patent Classification (CPC):
**H01M 8/188; H01M 8/04186; H01M 8/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Centre National de la Recherche Scientifique**
**75016 Paris (FR)**
• **Université de Lorraine**
**54000 Nancy (FR)**

(72) Inventor: **ETIENNE, Mathieu**
**54500 Vandoeuvre-Lès-Nancy (FR)**

(74) Representative: **IPAZ**
**Bâtiment Platon**
**Parc Les Algorithmes**
**91190 Saint-Aubin (FR)**

(54) **REDOX FLOW BATTERY**

(57) The invention relates to Redox flow battery comprising at least one electrochemical cell (CEC), a further electrochemical cell (SEC), an electrode disposed or arranged within each electrochemical half-cell, an ion-exchange membrane separating the two electrochemical half-cells of each electrochemical cell and circulating means arranged to circulate a first electrolytic media intended to be received in the battery through an electrochemical half-cell (FCEHC) of each of the at least one electrochemical cell and through an electrochemical half-cell (FSEHC) of the further electrochemical cell. One electrochemical half-cell (SSEHC) of SEC comprises at least one redox couple $M^y/M^x$ insoluble in a second electrolytic media intended to be received in the SSEHC, according to formula 1 $M^y + pe^- \leftrightarrow M^x$, formula 1, wherein x and y are oxidation number. The FSEHC is arranged to reduce an oxidized state $C^b$ to a reduced state $C^c$, and conversely, of at least one redox couple $C^b/C^c$ comprised in the first electrolytic media according to formula 2 $C^b + ne^- \leftrightarrow C^c$, formula 2, wherein b and c are oxidation number. An absolute potential difference $|\Delta E_1|$ between a redox potential $E(C^b/C^c)$ of the at least one couple $C^b/C^c$, in a given or predetermined first electrolytic media, and a redox potential $E(M^y/M^x)$ of the at least one couple $M^y/M^x$, in a given or predetermined second electrolytic media, is lower than or equal to 0.8 V.

Figure 1

## Description

### Field of the invention

The present invention relates to the field of electrical energy storage.

The invention belongs to the field of storage batteries.

In particular, the present invention deals with a redox flow battery type.

### Background of the invention

Replacement of fossil fuels by renewable sources of energies (e.g. solar, wind or hydraulic) requires the massive development of storage means of electrical energy produced intermittently. This storage is mandatory due to significant fluctuations in electricity production and the daily shift between peak production and peak consumption. Finally, especially for photovoltaic production, there is a seasonal gap between the maximum electricity production in summer and the maximum electrical energy needs for heating in winter. Thus, there is a need for electrical energy storage means able to store electrical energy for hours as well as for months.

One major option relies in a significant increase of electrochemical energy storage. The market is currently dominated by Li-ion battery technologies considered as the most efficient and reliable technology for electrical energy storage. The seasonal storage of renewable energy for a small new detached house of 100 m$^2$ that meets the thermal insulation standards using a Li-ion technology will reach several thousands of euros, which is prohibitive.

One also knows redox flow batteries. Redox flow batteries are based on the use of a circulating anolyte and a circulating catholyte; the anolyte being solely in contact with the anode of the battery and the catholyte being solely in contact with the cathode of the battery. The main limitation of the current redox flow batteries is their limited power density.

An object of the invention is to provide a battery and a method for electrical energy storage which :

- overcome, at least in part, the drawbacks and/or limitations of the state of the art,

- is risk-free,

- is low cost,

- is suitable, but not limited to, for neighborhood storage or individual storage, for single-family home or small communities for instance,

- relies on abundant elements,

- is implemented, in whole or in part, at ambient or near ambient temperature, and/or

- is implemented, in whole or in part, at atmospheric pressures or near atmospheric pressure

### Summary of the invention

To this end, there is provided a redox flow battery type, called battery.

The battery comprises at least one electrochemical cell, called CEC for conversion electrochemical cell. Preferably, the CEC or the battery comprises one or two CEC.

Each CEC comprises two electrochemical half-cells, called CEHC for conversion electrochemical half-cells.

The battery further comprises a further electrochemical cell, called SEC for storage electrochemical cell. Preferably, the battery comprises one or a single SEC.

Each SEC comprises two electrochemical half-cells, called SEHC for storage electrochemical half-cells.

The battery further comprises an electrode, preferably one or a single electrode, disposed or arranged within each electrochemical half-cell.

The battery further comprises an ion-exchange membrane, preferably one or a single ion-exchange membrane, separating the two electrochemical half-cells of each electrochemical cell. Preferably, the battery comprises one or a single ion-exchange membrane for each electrochemical cell.

The battery further comprises circulating means. The circulated means are arranged to circulate an electrolytic media, called first electrolytic media.

The first electrolytic media is intended to be received in the battery.

The circulating means are arranged to circulate the first electrolytic media through a first CEHC of each CEC, called FCEHC, and through a first SEHC, called FSEHC, of the SEC. Preferably, the circulated means are arranged to circulate the first electrolytic media in a closed loop. Preferably, the circulated means are arranged to circulate the first electrolytic media, through or within the FCEHC and the FSEHC, in a closed loop.

The electrode of the second SEHC, said second SEHC being called SSEHC, comprises at least one redox couple $M^y/M^x$.

Preferably, the least one redox couple $M^y/M^x$ is, preferably irreversibly, fixed or immobilized or attached or bonded to the electrode of the SSEHC.

The at least one redox couple $M^y/M^x$ is insoluble in a second electrolytic media.

The second electrolytic media is intended to be received in the SSEHC.

The at least one redox couple $M^y/M^x$ is arranged to exhibit at least two oxidation states, namely $M^y$ and $M^x$.

The at leat one redox couple $M^y/M^x$ is suitable to be reduced from an oxidized state $M^y$ to a reduced state $M^x$, and conversely, according to formula 1:

$M^y + pe^- \leftrightarrow M^x$, formula 1, wherein x and y are oxidation number.

The FSEHC is arranged to reduce an oxidized state $C^b$ of at least one redox couple $C^b/C^c$ to the reduced state $C^c$ of the at least one redox couple $C^b/C^c$, and conversely. In other words, the FSEHC is arranged to reduce the oxidized state $C^b$ of the at least one redox couple $C^b/C^c$ to the reduced state $C^c$ of the at least one redox couple $C^b/C^c$ and to oxidize the reduced state $C^c$ of the at least one redox couple $C^b/C^c$ to the the oxidized state $C^b$ of the at least one redox couple $C^b/C^c$.

The at least one redox couple $C^b/C^c$ is comprised in the first electrolytic media.

The at least one redox couple $C^b/C^c$ may comprise, or may consist in, at least in part, at least one redox couple $C^b/C^c$.

The at least one redox couple $C^b/C^c$ comprises at least two oxidation states, namely $C^b$ and $C^c$.

The at least one redox couple $C^b/C^c$ is suitable to be reduced from an oxidized state $C^b$ to a reduced state $C^c$, and conversely, according to formula 2:

$C^b + ne^- \leftrightarrow C^c$, formula 2, wherein b and c are oxidation number.

An absolute potential difference $|\Delta E_1|$ between a redox potential $E(C^b/C^c)$ of the at least one couple $C^b/C^c$, in a given or predetermined first electrolytic media, and a redox potential $E(M^y/M^x)$ of the at least one couple $M^y/M^x$, in a given or predetermined second electrolytic media, is lower than or equal to 0.8 V.

Preferably, the two electrochemical half-cells of each electrochemical cell of the battery are two distinct cells. Preferably, each electrochemical half-cells of the battery forms or constitutes a cell or a compartment or chamber, preferably a distinct or different cell or compartment or chamber.

According to the invention, it may be understood by "electrolytic media":

- a liquid (solvent) or a gel comprising (mobile) one or several ionic specie(s),

- a liquid (solvent) or a gel having sufficient electrical conductivity,

- an electrolyte.

Preferably, the second CEHC of each CEC, called SCEHC, comprises an electrode.

Preferably, since each CEC are or constitutes an electrochemical cell, the skilled person will necessarily understand that:

- each CEC comprises a first CEHC, that is, the FCEHC, and a second CECH, that is, the SCEHC,

- the SEC comprises a first SEHC, that is, the FSEHC, and a second SEHC, that is, the SSEHC.

Preferably, $|\Delta E_1| = E(C^b/C^c)-E(M^y/M^x)$, where $E(M^y/M^x)$ is the redox potential of the at least one couple $M^y/M^x$, for a predetermined or given second electrolytic media, in volts in volts, and $E(C^b/C^c)$ is the redox potential of the couple $C^b/C^c$, for a predetermined or given first electrolytic media, in volts.

Preferably, $|\Delta E1|$ is lower than or equal to 0.8 Volts (V), preferably to 0.75, more preferably to 0.7, even more preferably to 0.65, most preferably to 0.6, even most preferably to 0.55, particularly advantageously to 0.5, particularly advantageously to 0.45, more particularly advantageously to 0.4, even more particularly advantageously to 0.35 and in a particularly advantageous manner lower than or equal to 0.3 V.

Even more preferably, $|\Delta E_1|$ is lower than or equal to 0.25 V, most preferably to 0.2, even most preferably to 0.15, particularly advantageously to 0.1 and particularly advantageously lower than or equal to 0.05 V.

In the most preferred manner, $|\Delta E1|$ is equal to 0 V.

Preferably, the at least one couple $M^y/M^x$ is chosen according to the at least the one couple $C^b/C^c$, or a given or predetermined at least the one couple $C^b/C^c$, and/or, more preferably, the at least one couple $C^b/C^c$ is chosen according to the at least one couple $M^y/M^x$, or a given or predetermined at least one couple $M^y/M^x$.

The electrode of the SSEHC may comprise several redox couples, insoluble in water: $M^y/M^x$, $M^z/M^y$, $M^a/M^z$, etc, with $a>z>y>x$.

The several redox couples may consist or may be made of a single chemical element or material or may consist or may be made of different chemical elements or materials.

The electrode of the SSEHC may comprise or may be made of several materials or chemical elements. The electrode of the SSEHC may comprise or may be made of the at least one redox couple $M^y/M^x$ coated on a conductive material.

The SSEHC may comprise one or more electrode.

Preferably, at least two of the redox form, preferably each of the redox form, of the at least one redox couple $M^y/M^x$ is electroactive.

Preferably, the at least one redox couple $M^y/M^x$ is, and preferably remain, in solid form.

Preferably, $E(M^y/M^x)$ is comprised between -0.6 V and +0.6 V versus reversible hydrogen electrode.

Preferably, the at least one redox couple $M^y/M^x$ comprises:

- a metal such as Iron, Zinc, Tungsten, Cadmium, Copper, Bismuth, Antimony, Lead, a Metal hydride such as LaNis,

- an insoluble organic molecule such as anthraquinone and/or an insoluble redox polymer such as Polyaniline.

Preferably, the SEHC, in particular SSEHC, and/or CEHC, in particular FCEHC but not necessarily SCEHC, does not comprise gaseous dioxygen.

Preferably, the electrode of the second CEHC of each CEC, said second CEHC being called SCEHC, is arranged to reversibly oxidize and reduce at least one redox couple $A^d/A^e$.

Preferably, the least one redox couple $A^d/A^e$ is comprised in a third electrolytic media.

Preferably, the third electrolytic media is intended to be in contact with the SCEHC.

The SCEHC may comprised gaseous dioxygen. The gaseous dioxygen may be comprised in the third, fourth and/or fifth electrolytic media.

Preferably, the at least one redox couple $A^d/A^e$ is arranged to exhibit at least two oxidation states, namely $A^d$ and $A^e$.

Preferably, the at least one redox couple $A^d/A^e$ is suitable to be reduced from an oxidized state $A^d$ to a reduced state $A^e$, and conversely, according to formula 3:

$A^d + oe^- \leftrightarrow A^e$, formula 3, wherein d and e are oxidation number.

Preferably, the battery comprises one CEC, or a single CEC, or two CEC.

One or each of the SEHC and/or one or each of the CEHC:

- may communicate with the atmosphere or ambient atmosphere or may be sealed (isolated), and/or

- being aerated, and/or

- the electrolytic media may be replaced (withdrawn from and injected in one or each of the SEHC and/or one or each of the CEHC).

The battery may comprise:

- one CEC, or a single CEC, and the electrode of the second SCEHC of the single CEC is arranged to reversibly oxidize and reduce the at least one redox couple $A^d/A^e$, or

- two CEC, and:

  • the electrode of the second SCEHC of a first CEC is arranged to reversibly oxidize and reduce the at least one redox couple $A^d/A^e$,

  • the electrode of the second SCEHC of a second CEC is arranged to reversibly oxidize and reduce the at least one redox couple $A^d/A^e$.

Preferably, the battery comprises two CEC, and:

- the electrode of the SCEHC of the first CEC is arranged to oxidize a reduced state $B^g$ of at least one redox couple $B^f/B^g$

to the oxidized state $B^f$ of the at least one redox couple $B^f/B^g$, and

- the electrode of the SCEHC of the second CEC is arranged to reduce an oxidized state $D^h$ of at least one redox couple $D^h/D^i$ to a reduced state D' of the at least one redox couple $D^h/D^i$.

The at least one redox couple $B^f/B^g$ is comprised in a fourth electrolytic media.

The fourth electrolytic media is intended to be in contact with said electrode of the SEHC of the first CEC.

The at least one redox couple $B^f/B^g$ is arranged to exhibit at least two oxidation states, namely $B^f$ and $B^g$, and being suitable to be oxidized from a reduced state $B^g$ to an oxidized state $B^f$, according to formula 4:

$B^g \leftrightarrow B^f + re^-$ , formula 4, wherein g and f are oxidation number.

The at least one redox couple $D^h/D^i$ is comprised in a fifth electrolytic media.

The fifth electrolytic media is intended to be in contact with said electrode of the SCEHC of the second CEC.

The at least one redox couple $D^h/D^i$ is arranged to exhibit at least two oxidation states, namely $D^h$ and $D^i$, and being suitable to be reduced from an oxidized state $D^h$ to a reduced state D', according to formula 5:

$D^h + se^- \leftrightarrow D^i$, formula 5, wherein h and i are oxidation number.

Preferably, the electrolytic media(s) is/are not part nor comprised in the battery.

The first electrolytic media may be comprised in the battery.

Preferably, the electrolytic media(s) is/are intended to be added in the battery (for instance after installation of the battery on-site). Preferably, the electrolytic media is intended brought in contact with the CEHC and the SEHC.

The first electrolytic media may be different from, or identical to, the second electrolytic media and/or the third and/or the fourth and/or the fifth electrolytic media, and/or the second electrical media may be different from, or identical to, the third electrolytic media and/or the fourth and/or the fifth electrolytic media, and/or the third electrolytic media may be different from, or identical to, the fourth and/or the fifth electrolytic media, and/or the fourth electrical media may be different from, or identical to, the fifth electrolytic media.

Preferably, the ion-exchange membrane is impermeable to the at least one redox couple $C^b/C^c$ and/or to the at least one redox couple $A^d/A^e$ and/or to the at least one redox couple $B^f/B^g$ and/or to the at least one redox couple $D^h/D^i$.

The at least one couple $B^f/B^g$ or the at least one couple $D^h/D^i$ can be identical or the same as the at least one couple $A^d/A^e$.

Preferably, the at least one redox couple $C^b/C^c$ comprises:

- Quinones and anthraquinone dérivatives (for example 1,2-Dihydroxyanthraquinone (2,6-DHAQ), 2,7-Dihydroxynaphthalene (2,7-DHN), Benzoquinone (BQ) / Hydroquinone (HQ), anthraquinone-2,6-disulfonic acid (AQDS)), phenazine derivatives (for example 7,8-dihydroxy-2-phenazinesulfonic acid), viologen derivatives, azo derivatives, alloxazines, flavin derivatives, tetrathiafulvalene, triphenylamine, and/or

- inorganic metal ions and complexes from vanadium , chrome, iron, zinc.

Preferably, an absolute potential difference $|\Delta E_2|$ between a redox potential $E(A^d/A^e)$ of the at least one redox potential of the couple $A^d/A^e$, in its given or predetermined third electrolytic media, and a redox potential of the at least one couple $M^y/M^x$, in its given or predetermined second electrolytic media, is higher than or equal to 0.9 V.

Preferably, an absolute potential difference $|\Delta E_2|$ between a redox potential $E(B^f/B^g)$ of the at least one redox potential of the couple $B^f/B^g$ and/or a redox potential $E(D^h/D^i)$ of the at least one redox potential of the couple $D^h/D^i$, in their respective given or predetermined fourth and fifth electrolytic media, and a redox potential of the at least one couple $M^y/M^x$, in its given or predetermined second electrolytic media, is higher than or equal to 1 V.

Preferably, $|\Delta E_2|$ is higher than or equal to 1 Volts (V), preferably to 1.1, more preferably to 1.2, even more preferably to 1.3, most preferably to 1.4, even most preferably to 1.5, particularly advantageously to 1.6, particularly advantageously to 1.7, more particularly advantageously to 1.8, even more particularly advantageously to 1.9, in a particularly advantageous manner to 2 and in the most preferred manner to 2.1 V.

Preferably, $|\Delta E_2| = E(A^d/A^e)-E(M^y/M^x)$ and/or $|\Delta E_2| = E(B^f/B^g)-E(M^y/M^x)$ and/or $|\Delta E_2| = E(D^h/D^i)-E(M^y/M^x)$, where $E(A^d/A^e)$, $E(B^f/B^g)$ and $E(D^h/D^i)$ is respectively the redox potential of the at least one couple $A^d/A^e$, in volts, in a predetermined or given third electrolytic media, the redox potential of the at least one couple $B^f/B^g$, in volts, in predetermined or given fourth electrolytic media, and the redox potential of the at least one couple $D^h/D^i$, in volts, in a predetermined or given fifth electrolytic media.

Preferably, an absolute potential difference $|\Delta E_3|$ between the redox potential $E(A^d/A^e)$ of the at least one couple $A^d/A^e$ (or $E(A^d/A^e)$ or $E(A^d/A^e)$), in a given or predetermined third electrolytic media (or fourth or fifth electrolytic media), and the redox potential $E(C^b/C^c)$ of the at least one couple $C^b/C^c$, in a given or predetermined first electrolytic media.

Preferably, $|\Delta E_3|$ is higher than or equal to 0.2 Volts (V), preferably to 0.3, more preferably to 0.4, even more preferably to 0.5, most preferably to 0.6, even most preferably to 0.7, particularly advantageously to 0.8, particularly advantageously to 0.9, more particularly advantageously to 1, even more particularly advantageously to 1.1, in a particularly advantageous manner to 1.2 and in the most preferred manner to 1.3 V.

Preferably, the at least one redox couple $A^d/A^e$, and/or the at least one redox couple $B^f/B^g$ and/or the at least one redox couple $D^h/D^i$, comprised or consists in the redox couple $O_2/H_2O$ according to formula 6:

$$2H_2O \leftrightarrow O_2 + 4H^+ + 4\ e^-, \qquad \text{formula 6.}$$

Preferably, the electrode of the SCEHC of the first CEC is different from the electrode of the SCEHC of the second CEC.

Preferably, the electrode of each SCEHC comprises or consists in a catalyst or a combination of catalysts suitable to oxidize and reduce, in a reversible way, the at least one redox couple $A^d/A^e$.

Preferably, the catalyst or a combination of catalysts of the at least one redox couple $A^d/A^e$ is active for both dioxygen evolution reaction and dioxygen reduction reaction.

The electrode of each SCEHC may be made of or may comprise several catalysts providing activities for both dioxygen evolution reaction and dioxygen reduction reaction.

Preferably:

- the electrode of the SCEHC of the first CEC comprises or consists in a catalyst or a combination of catalysts suitable to, preferably arranged to, oxidize the reduced state $B^g$ to the oxidized state $B^f$, or

- the electrode of the SCEHC of the second CEC comprises or consists in a catalyst or a combination of catalysts suitable to, preferably arranged to, reduce an oxidized state $D^h$ to a reduced state D'.

Preferably:

- the electrode of the SCEHC of the first CEC comprises or consists in a catalyst or a combination of catalysts suitable to, preferably arranged to, dioxygen evolution reaction and/or dioxygen reduction,

- the electrode of the SCEHC of the second CEC comprises or consists in a catalyst or a combination of catalysts suitable to, preferably arranged to dioxygen reduction reaction and/or dioxygen reduction.

The catalyst of any of the electrodes of the battery, preferably the catalyst of the SCEHC, may be or may comprise or may consist in transition metal oxides Cobalt Oxide ($Co_3O_4$), Nickel-Cobalt Oxides ($NiCo_2O_4$), Manganese Oxide (MnOz), perovskite Oxides ($ABO_3$), $La_{0.6}Sr_{0.4}CoO_3$ (LSCO), $Ba_{0.5}Sr_{0.5}Co_{0.8}Fe_{0.2}O_3$ (BSCF), layered Double Hydroxides (LDHs), NiFe-LDH, CoFe-LDH; transition metal-nitrogen-carbon (M-N-C), Fe-N-C, Co-N-C, spinel oxides ($AB_2O_4$), $Co_3O_4$ and $NiCo_2O_4$, $MnCo_2O_4$, metal phosphides and phosphates, cobalt phosphate (Co-Pi), cobalt phosphide (CoP), carbon-based catalysts, nitrogen-doped graphene or carbon nanotubes (N-C), carbon-supported metal nanoparticles, single-atom catalysts (SACs), Fe-N-C SACs, Co-N-C SACs, metal chalcogenides, cobalt sulfide (CoSz), nickel selenide ($NiSe_2$).

The catalyst of any of the electrodes of the battery, preferably the catalyst of the SCEHC, more preferably the catalyst for the oxygen evolution reaction, that is $2H_2O \rightarrow O_2 + 4H^+ + 4\ e^-$, may be or may comprise or may consist in transition metal oxides from iridium (Ir), ruthenium (Ru), nickel (Ni), cobalt (Co), and manganese (Mn); perovskites ($ABO_3$), $LaNiO_3$ $LaCoO_3$, and $SrCoO_3$ and doped perovskites, spinels ($AB_2O_4$) $NiCo_2O_4$ and $CoFe_2O_4$, transition metal hydroxides (e.g., $Ni(OH)_2$, $Co(OH)_2$) and oxyhydroxides (e.g., NiOOH, CoOOH), transition metal phosphates (e.g., Co-Pi) and phosphides (e.g., FeP, CoP), layered double hydroxides (LDHs), NiFe-LDH, carbon-based materials (e.g., doped graphene), single-atom catalysts involve the dispersion of isolated metal atoms (e.g., Fe, Co, Ni) on a support material (e.g., carbon).

The catalyst of any of the electrodes of the battery, preferably the catalyst of the SCEHC, more preferably the catalyst for the oxygen reduction, that is $O_2 + 4H^+ + 4\ e^- \rightarrow 2H_2O$, may be or may comprise or may consist in transition metal oxides from iridium (Ir), ruthenium (Ru), nickel (Ni), cobalt (Co), and manganese (Mn); perovskites ($ABO_3$), LaNiOs, LaCoOs, and SrCoOs and doped perovskites, spinels ($AB_2O_4$) $NiCo_2O_4$ and $CoFe_2O_4$, transition metal hydroxides (e.g., $Ni(OH)_2$, $Co(OH)_2$) and oxyhydroxides (e.g., NiOOH, CoOOH), transition metal phosphates (e.g., Co-Pi) and phosphides (e.g., FeP, CoP), layered double hydroxides (LDHs), NiFe-LDH, carbon-based materials (e.g., doped graphene), single-atom catalysts involve the dispersion of isolated metal atoms (e.g., Fe, Co, Ni) on a support material (e.g., carbon).

The battery may further comprise current collectors, preferably each electrochemical cell may comprises two current collectors, preferably each CEHC and each SEHC may comprise a or one current collector, respectively connected to the electrode of one CEHC or one SEHC.

The battery may further comprise or may be arranged to be connected to a command unit and/or a control unit and/or a current generator arranged and/or configured and/or programmed to circulate a predetermined or given or calculated current in an electrochemical cell, preferably of each electrochemical cell.

Preferably, the command unit and/or the control unit and/or the current generator is arranged and/or configured and/or programmed to control and/or stop current injection through each electrochemical cell according to a potential difference measured, by means dedicated to measure potential differences, between two electrodes of each electrochemical cell.

The command unit and/or the control unit and/or the current generator may be arranged to stop current injection through the two electrodes of any electrochemical cell when a predetermined potential difference or a potential difference threshold, between the two electrodes of an electrochemical cell, is reached.

The device may further comprise means for monitoring and/or controlling the voltage between the two electrodes of each electrochemical cell and/or the means for monitoring and/or controlling current injected the two electrodes of each electrochemical cell.

The at least one redox couple $B^f/B^g$ is or may be suitable to be, possibly but non-necessarily in a reversible way, oxidized from a reduced state $B^g$ to an oxidized state $B^f$.

The at least one redox couple $D^h/D^i$ is or may be suitable to be, possibly but non-necessarily in a reversible way, reduced from an oxidized state $D^h$ to a reduced state D'.

Preferably, the at least one redox couple $B^f/B^g$ is different from the at least one redox couple $D^h/D^i$.

Preferably, the at least one redox couple $B^f/B^g$ is irreversibly oxidized from a reduced state $B^g$ to an oxidized state $B^f$ according to formula 4':

$B^g \rightarrow B^f + re^-$ , formula 4', wherein g and f are oxidation number.

Preferably, the at least one redox couple $D^h/D^i$ is irreversibly reduced from an oxidized state $D^h$ to a reduced state D' according to formula 5':

$D^h + se^- \rightarrow D^i$, formula 5', wherein h and i are oxidation number.

Preferably, formula 1, 2, 3, 4, 4', 5 and 5' are half-redox reactions, half-cell reactions or half-redox equations.

Preferably, n, p, o, r and s is the number of electrons involved in the considered oxidation and/or in the reduction. Preferably, n, p, o, r and s may positive or negative.

Thus, the skilled person knows how to balance the number of electrons n, p, o, r and s involved according to the oxidation numbers x, y, b, c, d, e, f, g, h and i, and conversely.

According to the invention, it is emphasized that each redox redaction of formula 1 to formula 5 illustrates, reflects or expresses the relation between the oxidation number of the oxidized state of a redox couple and the oxidation number of the reduced state of the redox couple. Each of formula 1 to 5 is electrically unbalanced. The skilled person would be able to electrically balanced the formula according to the electrolytic media and/or according to the redox couple used.

Thus, considering the following redox formula 7 $K^j + me^- \leftrightarrow K^l$, wherein the redox couple $K^j/K^l$ may be or may correspond to $M^y/M^x$, $C^b/C^c$, $A^d/A^e$, $B^f/B^g$ or $D^h/D^i$ and m may be or may correspond to p, n, o, r or s. Formula 7 may be expressed, for example, and preferably indistinctly, as:

$$K^j + me^- \leftrightarrow K^l,$$

$K^j + me^- + mH^+ \rightarrow K^lH_m$, for instance, but not exclusively, when the redox couple $K^j/K^l$ is organic and/or is not an hydrate or a coordination complex, or

$K^j + me^- \leftrightarrow K^l + C^{m-}$, for instance, but not exclusively, when the compound or atom K is inorganic and/or is a coordination complex, wherein $K^j$ may be described as $K^jC$ ($K^jC$ may be an hydrate and/or a coordination complex), or

$K^j + me^- \leftrightarrow K^l + mC^-$, for instance, but not exclusively, when the compound or atom K is inorganic and/or is a coordination complex, wherein $K^j$ may be described as $K^jC_m$ ($K^jC_m$ may be an hydrate and/or a coordination complex), or

$K^j + me^- + mC^+ \leftrightarrow K^l$, for instance, but not exclusively, when the compound M is inorganic and/or is a coordination complex, wherein $K^l$ may be described as $K^lC_m$ ($K^lC_m$ may be a hydrate/coordination complex).

For example, C can be described as, or may comprise, or may consist in:

- one or more, identical or different, atom or molecule of solvent, in particular a neutral form of the solvent,

- one or more, identical or different, ligand and/or one or more, identical or different, atom or molecule of a ionic solvent, or one or more, identical or different, atom or molecule of a ionic form of the solvent, that is a non-neutral solvent or partially charged solvent, which may be protic or aprotic, for instance hydronium ions or hydroxide ions,

- one or more, identical or different, atom or molecule of the electrolytic media,

- one or more, identical or different, atom or molecule of salt (preferably comprised in the electrolytic media 3), and/or

- one or more, identical or different, atom or molecule of electrolyte (of the electrolytic media).

Preferably, the first electrolytic media and/or the second and/or third and/or the fourth and/or the fifth electrolytic media comprises or consists in a protic solvent.

Preferably, the protic solvent may comprise or may be water.

Preferably, the electrolytic media is a proton acceptor. Preferably, the electrolytic media is capable of solvating protons and/or accepting protons.

The protic media may comprise or consist in an alcohol, a carboxylic acid, an aminated compound, ammonia, a sulfonated compound, a phosphonated compound, a boronated compound or a mixture thereof.

The protic media may comprise or consist of a protic Ionic Liquid.

The protic media may consist of a deep eutectic solvent.

Preferably, the second electrolytic media comprises one or more additives to limit or inhibit spontaneous reaction of the at least one redox couple $M^y/M^x$ with the second electrolytic media and/or with species (liquid or gaseous) contained in the second electrolytic media.

The first, third, fourth and/or fifth electrolytic media may comprise one or more additives to limit or inhibit spontaneous reaction of the at least one redox couple $C^b/C^c$, the at least one redox couple $A^d/A^e$, the at least one redox couple $B^f/B^g$ and/or the at least one redox couple $D^h/D'$ with their respective electrolytic media and/or with species (liquid or gaseous) contained in their respective electrolytic media.

Preferably, the one or more additives are arranged or suitable to prevent the dissolution of the at least one redox couple $M^y/M^x$, the at least one redox couple $C^b/C^c$, the at least one redox couple $A^d/A^e$, the at least one redox couple $B^f/B^g$ and/or the at least one redox couple $D^h/D^i$ in their respective electrolytic media.

Preferably, the second electrolytic media and/or the one or more additives enable or promote the at least one redox couple $M^y/M^x$ to remain immobilized or attached on the electrode of the SSEHC.

Preferably, the battery:

- comprises means arranged to remove and reintroduce the second electrolytic media into the SSEHC, and/or

- the electrode of the SSEHC is arranged to be removed from and to be reintroduced into the SSEHC.

Preferably, the battery comprises means arranged to remove and reintroduce, from/into each respective SEHC and/or into respective CEHC, the first, third, fourth and fifth electrolytic media.

Preferably, the means are arranged to remove or pump the electrolytic media(s) from the CEHC and/or the SEHC or to push the electrolytic media out the CEHC and/or the SEHC and, preferably, to refill the electrolytic media within the CEHC and/or the SEHC or put back the electrolytic media in contact within the electrodes, in particular to limit or avoid spontaneous oxidation of the reduced form $M^x$.

Preferably, the SSEHC is arranged to be removed or taken out of the second electrolytic media to limit or avoid spontaneous oxidation of the reduced form $M^x$ of the at least one redox couple $M^y/M^x$.

Preferably, a ratio between a charge capacity of the SSEHC and a charge capacity of the FSEHC, and/or a ratio between a volume of the SSEHC and a volume of the FSEHC, is higher than or equal to 10.

Preferably, a ratio between a charge capacity of the SSEHC and a charge capacity of the FSEHC, and/or a ratio between a volume of the SSEHC and a volume of the FSEHC, is higher than or equal to 10, preferably to 20, more preferably to 30, even more preferably to 40, most preferably to 50, even most preferably to 0.75, particularly advantageously to 100, particularly advantageously to 150, more particularly advantageously to 200, even more particularly advantageously to 250, in a particularly advantageous manner lower than or equal to 300 and the most preferred manner to 500.

According to the invention, it also provided method for electrical energy storage in a redox flow battery.

The method comprises the steps consisting in:

- circulating an electrolytic media, through the circulated means, called first electrolytic media:

  • through the CEHC of each CEC 3,
  • through the FSEHC (21), of a further electrochemical cell (2), called SEC (2) for storage electrochemical cell (2)

- reducing the oxidized state $M^y$, of the at least one redox couple $M^y/M^x$ and oxidizing the reduced state $M^x$ of the least one redox couple $M^y/M^x$, and conversely, according to formula 1.

Preferably, the method further comprises a step of charging the battery and a step of discharging the battery.
Preferably, the step of charging the battery comprises:

- reducing the oxidized state $M^y$ of the at least one redox couple $M^y/M^x$ into the reduced state $M^x$, preferably at the electrode of the SSEHC,

- oxidizing the reduced state $C^c$ of the at least one redox couple $C^b/C^c$ into the oxidized state $C^b$, preferably at the electrode of the FSEHC.

Preferably, the step of charging the battery further comprises:

- preferably at the electrode of each FCEHC, reducing the oxidized state state $C^b$ of the at least one redox couple $C^b/C^c$ into the reduced state $C^c$,

- preferably at the electrode of each SCEHC, oxidizing the reduced state $A^e$ of the at least one redox couple $A^d/A^e$ into the oxidized state $A^d$, and/or oxidizing the reduced state $B^g$ of the at least one redox couple $B^f/B^g$ into the oxidized state $B^f$, and/or oxidizing the reduced state D' of the at least one redox couple $D^h/D^i$ into the oxidized state $D^h$.

Preferably, the step of discharging the battery comprises:

- oxidizing the reduced state $M^x$ of the at least one redox couple $M^y/M^x$ into the oxidized state $M^y$, preferably at the electrode of the SSEHC,

- reducing the oxidized state $C^b$ of the at least one redox couple $C^b/C^c$ into the reduced state $C^c$, preferably at the electrode of the FSEHC.

Preferably, the step of discharging the battery comprises:

- preferably at the electrode of each FCEHC, oxidizing the reduced state $C^c$ of the at least one redox couple $C^b/C^c$ into the oxidized state $C^b$.

- preferably at the electrode of each SCEHC, reducing the oxidized state $A^d$ of the at least one redox couple $A^d/A^e$ into the reduced state $A^e$, and/or reducing the oxidized state $B^f$ of the at least one redox couple $B^f/B^g$ into the reduced state $B^g$, and/or reducing the oxidized state $D^h$ of the at least one redox couple $D^h/D^i$ into the reduced state D'.

Preferably, in the present application, it is understood by "oxidation" or "reduction" of a compound: an electrochemical oxidation or an electrochemical reduction of the compound in the electrolytic media.
Preferably, otherwise specified differently, the potential or redox potential is expressed in volts (V).
Preferably, the at least one first electrode and the at least one second electrode are intended to be in contact and/or immersed in the electrolytic media. In other words, when the battery is in operation, the at least one first electrode and the at least one second electrode are in contact and/or immersed in the electrolytic media.
Preferably, the electrolytic media(s) is removed from the CEHC and/or from the SEHC and/or the electrodes of the SSEHC is removed from the electrolyte media after the charge of the battery, that is, when the at least one couple $M^y/M^x$ is in its reduced state $M^x$.
Preferably, the electrolytic media is put back in contact with the electrodes of the CEHC and/or the SEHC, that is to say of the CEHC and/or the SEHC is refilled with the electrolytic media for the discharge of the battery.
Preferably, the battery according to the invention is intended, more preferably arranged and even more preferably specifically arranged, to implement the method according to the invention.
Thus, any feature of the battery according to the invention may be transposed and/or integrated in the method according to the invention and conversely.

**Brief description of the drawings**

Further inventive objects, features and advantages will become apparent from the following detailed description of several embodiments of the invention with reference to the drawing, in which:

- FIGURE 1 is a schematic representation of a sectional view of a first embodiment of the battery according to the invention,

- FIGURE 2 is a schematic representation of a sectional view of a second embodiment of the battery according to the invention during a charging phase of the battery,

- FIGURE 3 is a schematic representation of a sectional view of the second embodiment of the battery according to the invention during a discharging phase of the battery.

**Detailed description of embodiments of the invention**

The embodiments hereinafter described are not restrictive; other embodiments comprising a selection of features described hereinafter may be considered. A selection may comprise features isolated from a set of features (even if this selection is isolated among a sentence comprising other features thereof), if the selection is sufficient to confer a technical advantage or to distinguish the invention from the state of the art. This selection comprises at least a feature, preferably described by its technical function without structural features, or with a part of structural details if this part is sufficient to confer a technical advantage or to distinguish the invention from the state of the art on its own.

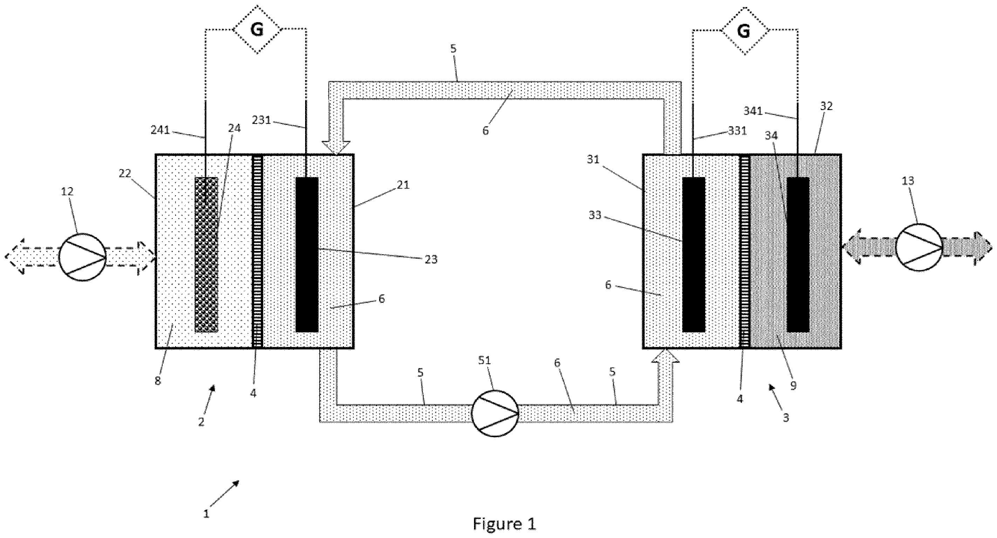

Non-limiting embodiments of the redox flow battery 1, said battery 1, according to the invention are illustrated in FIGURES 1 to 3.

The battery 1 comprises at least one electrochemical cell 3, called CEC 3 for conversion electrochemical cell 3. Each CEC 3, 7 comprises two electrochemical half-cells 31, 32, called CEHC 31, 32 for conversion electrochemical half-cells 31, 32.

Each CEC 3, comprises a first CEHC 31, called FCEHC 31, and a second CEHC 32, called SCEHC 32.

The battery 1 further comprises a further electrochemical cell 2, called SEC 2 for storage electrochemical cell 2. The SEC 2 comprises two electrochemical half-cells 21, 22, called SEHC 21, 22 for storage electrochemical half-cells 21, 22.

The SEC 2 comprises a first SEHC 21, called FSEHC 21, and a second SEHC 22, called SSEHC 32.

Each electrochemical half-cell of the battery 1 comprises an electrode 23, 24, 33, 34, disposed or arranged within each electrochemical half-cell.

Each electrochemical cell of the battery 1 comprises an ion-exchange membrane 4 separating the two electrochemical half-cells of each electrochemical cell.

The battery 1 further comprises circulating means 5 arranged to circulate an electrolytic media 6, called first electrolytic media 6, through each FCEHC 31, 71 and through the FSEHC 21.

The battery 1, in particular the circulating means 5, the FCEHC 31 and the FSEHC 21, is intended to receive the first electrolytic media.

Preferably, the battery 1 and/or the circulating means 5 is arranged to circulate the first electrolytic media 6 only and solely through each FCEHC 31, 71 and through the FSEHC 21, preferably in a closed loop.

The SSEHC 22 comprises at least one redox couple $M^y/M^x$ fixed or bounded, preferably irreversibly, to the SSEHC 22. The SSEHC 22 may be made, in whole or in part, of at least one redox couple $M^y/M^x$. For example, an outer layer of the SSEHC 22 is made of or comprises the at least one redox couple $M^y/M^x$.

Preferably, the at least one redox couple $M^y/M^x$ is insoluble in a second electrolytic media 8, said second electrolytic media being intended to be received in the SSEHC 22.

The at least one redox couple $M^y/M^x$ is arranged to exhibit at least two oxidation states, namely $M^y$ and $M^x$. The at least one redox couple $M^y/M^x$ is suitable or arranged to be reduced from an oxidized state $M^y$ to a reduced state $M^x$, and conversely, that is, in reversible way, according to formula 1:

$M^y + pe^- \leftrightarrow M^x$, formula 1, wherein x and y are oxidation number.

The FSEHC 21 is arranged to reduce an oxidized state $C^b$ of at least one redox couple $C^b/C^c$ to the reduced state $C^c$ of the at least one redox couple $C^b/C^c$ and to oxidize the reduced state $C^c$ of the at least one redox couple $C^b/C^c$ to the oxidized state $C^b$ of the at least one redox couple $C^b/C^c$.

The at least one redox couple $C^b/C^c$ comprises at least two oxidation states, namely $C^b$ and $C^c$. The at least one redox couple $C^b/C^c$ is suitable to be reduced from an oxidized state $C^b$ to a reduced state $C^c$, and conversely, according to formula 2:

$C^b + ne^- \leftrightarrow C^c$, formula 2, wherein b and c are oxidation number.

The first electrolytic media 6, intended to be added or received in the battery 1, comprises the at least one redox couple $C^b/C^c$.

According to the invention, an absolute potential difference $|\Delta E_1|$ between a redox potential $E(C^b/C^c)$ of the at least one couple $C^b/C^c$, in a given or predetermined first electrolytic media, and a redox potential $E(M^y/M^x)$ of the at least one couple $M^y/M^x$, in a given or predetermined second electrolytic media, is lower than or equal to 0.8 V.

Using an electrochemical cell, i.e. a SEC 2, a fortiori a half-electrochemical cell, i.e. the SSEHC 22, separated from the conversion cell, i.e. a CEC 3, allow separating the conversion from the storage. This overcomes the issue of the Metal-air battery in which oxygen is necessarily comprises within each of the two half-electrochemical cells (i.e. in the storage half-electrochemical cell). Hence, degradation of the electrolyte and/or of the electrodes due to secondary reactions between the electrolytes, the electrodes and the species within the electrolyte (dioxygen...) is avoided since the conversion is carried out in a different electrochemical cell. Furthermore, the environment in the SSEHC 22 can be specific and/or controlled.

Using an electrochemical cell, i.e. a SEC 2, comprising a half-electrochemical cell, i.e. the SSEHC 22, according to the invention (among other wherein the electrical storage is stored within the electrode of the electrode), and a half-electrochemical cell, i.e. the FSEHC 21, wherein the redox couple flowing through the FSEHC 21 allows to:

- increase the efficiency of the storage by providing the necessary/required amount of electrons to the SSEHC 22 (that is, the storage location of the electrical energy) so that the only limitation is the storage/electrical capacity of the SSEHC 22,

- overcome the drawbacks of the redox flow batteries by increasing the power density of the battery 1.

Hence, according to the invention, the electrical energy storage is carried out by, during the charging of the battery 1:

- reducing the oxidized state $M^y$ of the at least one redox couple $M^y/M^x$, at the electrode 24 of the SSEHC 22,

- oxidizing the reduced state $C^c$ of the at least one redox couple $C^b/C^c$, at the electrode 23 of the FSEHC 21,

- reducing the oxidized state state $C^b$ into the reduced state $C^c$, at the electrode 33 of each FCEHC 31, 71, and

- circulating the electrolytic media 6, by the circulated means 5, through the FCEHC 31 of each CEC 3, 7 and through the FSEHC 21.

Hence, the electrical energy delivery is carried out by, during the discharging of the battery 1:

- oxidizing the reduced state $M^x$ of the at least one redox couple $M^y/M^x$ into the oxidized state $M^y$, at the electrode 24 of the SSEHC 22,

- reducing the oxidized state $C^b$ of the at least one redox couple $C^b/C^c$ into the reduced state $C^c$, at the electrode 23 of the FSEHC 21,

- oxidizing the reduced state $C^c$ of the at least one redox couple $C^b/C^c$ into the oxidized state $C^b$, at the electrode of each FCEHC 31, 71, and

- circulating the electrolytic media 6, by the circulated means 5, through the FCEHC 31 of each CEC 3, 7 and through the FSEHC 21.

Consequently, the electrical energy storage is also carried out by, during the charging of the battery 1:

- oxidizing a reduced state $A^e$ of at least one redox couple $A^d/A^e$ into the oxidized state $A^d$ of the at least one redox couple $A^d/A^e$, at the electrode 34 of the SCEHC 32, and/or

- oxidizing the reduced state $B^g$ of at least one redox couple $B^f/B^g$ into the oxidized state $B^f$ of the at least one redox couple $B^f/B^g$, at the electrode 34 of the SCEHC 32 of a first CEC 3, and/or

- oxidizing the reduced state D' of the at least one redox couple $D^h/D^i$ into the oxidized state $D^h$ of the at least one redox couple $D^h/D^i$, at the electrode 74 of the SCEHC 72 of a second CEC 7.

Consequently, the electrical energy storage is also carried out by, during the discharging of the battery 1:

- reducing an oxidized state $A^d$ of the at least one redox couple $A^d/A^e$ into the reduced state $A^e$ of the at least one redox couple $A^d/A^e$, at the electrode 34 of the SCEHC 32,and/or

- reducing the oxidized state $B^f$ of the at least one redox couple $B^f/B^g$ into the reduced state $B^g$ of the at least one redox couple $B^f/B^g$, at the electrode 34 of the SCEHC 32 of a first CEC 3, and/or

- reducing the oxidized state $D^h$ of the at least one redox couple $D^h/D^i$ into the reduced state D' of the at least one redox couple $D^h/D^i$, at the electrode 74 of the SCEHC 72 of a second CEC 7.

The at least one redox couple $A^d/A^e$ is arranged to exhibit at least two oxidation states, namely $A^d$ and $A^e$, and being suitable to be reduced from an oxidized state $A^d$ to a reduced state $A^e$, according to formula 3:
$A^d + oe^- \leftrightarrow A^e$, formula 3, wherein d and e are oxidation number.

The at least one redox couple $A^d/A^e$ is comprised in a third electrolytic media 9 is intended to be received and/or in contact the SCEHC 32.

The at least one redox couple $B^f/B^g$ is arranged to exhibit at least two oxidation states, namely $B^f$ and $B^g$, and is suitable to be oxidized from a reduced state $B^g$ to an oxidized state $B^f$, according to formula 4:
$B^g \leftrightarrow B^f + re^-$ , formula 4, wherein g and f are oxidation number.

The at least one redox couple $B^f/B^g$ is comprised in a fourth electrolytic media 10 intended to be in contact with the SCEHC 32 of the first CEC 3.

The at least one redox couple $D^h/D^i$ is arranged to exhibit at least two oxidation states, namely $D^h$ and D', and is suitable to be reduced from an oxidized state $D^h$ to a reduced state D', according to formula 5:
$D^h + se^- \leftrightarrow D^i$, formula 5, wherein h and i are oxidation number.

The at least one redox couple $D^h/D^i$ is comprised in a fifth electrolytic media 11 intended to be in contact with the SCEHC 72 of the second CEC 7.

According to the invention, the of the reduced form $M^x$ and the oxidized form $M^y$ of the at least one redox couple $M^y/M^x$ is at any time fixed to the electrode 24, that is, insoluble in the second electrolytic media 8 so that neither $M^x$ nor $M^y$ may be found and/or dissolved within the second electrolytic media 8.

Moreover, the first electrode 24 and/or the at least one redox couple $M^y/M^x$ and/or the second electrolytic media 8 will be chosen to limit spontaneous oxidation of the reduced form $M^x$ of the at least one redox couple $M^y/M^x$ and/or the reduction of the oxidized form $M^y$ of the at least one redox couple $M^y/M^x$. In this storage step, depending on the redox potential $E(M^y/M^x)$ of the at least one couple $M^y/M^x$, energy is provided to or recovered from the battery 1 through current injection or through current recovery at a defined potential between electrode 24 and electrode 23.

According to a first non-limiting embodiment illustrated in FIGURE 1, the battery 1 comprises a single CEC 3.

According to the first non-limiting embodiment, the electrode 34 of the SCEHC 32 of the CEC 3 is arranged to, reversibly, oxidize and reduce the at least one redox couple $A^d/A^e$.

According to the first non-limiting embodiment, during the charging of the battery 1, the electrode 34 of the SCEHC 32 of the single CEC 3 is arranged to oxidize the reduced state $A^e$ of the at least one redox couple $A^d/A^e$ into the oxidized state $A^d$.

According to the first non-limiting embodiment, during the discharging of the battery 1, the electrode 34 of the SCEHC 32 of the single CEC 3 is arranged to reduce the oxidized state $A^d$ of the at least one redox couple $A^d/A^e$ into the reduced state $A^e$.

According to the first non-limiting embodiment, the at least one redox couple $A^d/A^e$ is suitable or arranged to be reversibly reduced from the oxidized state $A^d$ to the reduced state $A^e$ and to be reversibly oxidized from the reduced state $A^e$ to the oxidized state $A^d$.

Preferably, the absolute potential difference $|\Delta E_2|$ between the redox potential $E(A^d/A^e)$ of the at least one redox potential of the couple $A^d/A^e$, in its given or predetermined third electrolytic media 9, and a redox potential of the at least one couple $M^y/M^x$, in its given or predetermined second electrolytic media 8, is higher than or equal to 1 V.

Preferably, the absolute potential difference $|\Delta E_2|$ between the redox potential $E(B^f/B^g)$ of the at least one redox potential of the couple $B^f/B^g$ and/or the redox potential $E(D^h/D^i)$ of the at least one redox potential of the couple $D^h/D^i$, in their respective given or predetermined fourth 10 and fifth 11 electrolytic media, and the redox potential of the at least one couple $M^y/M^x$, in its given or predetermined second electrolytic media (8), is higher than or equal to 1 V.

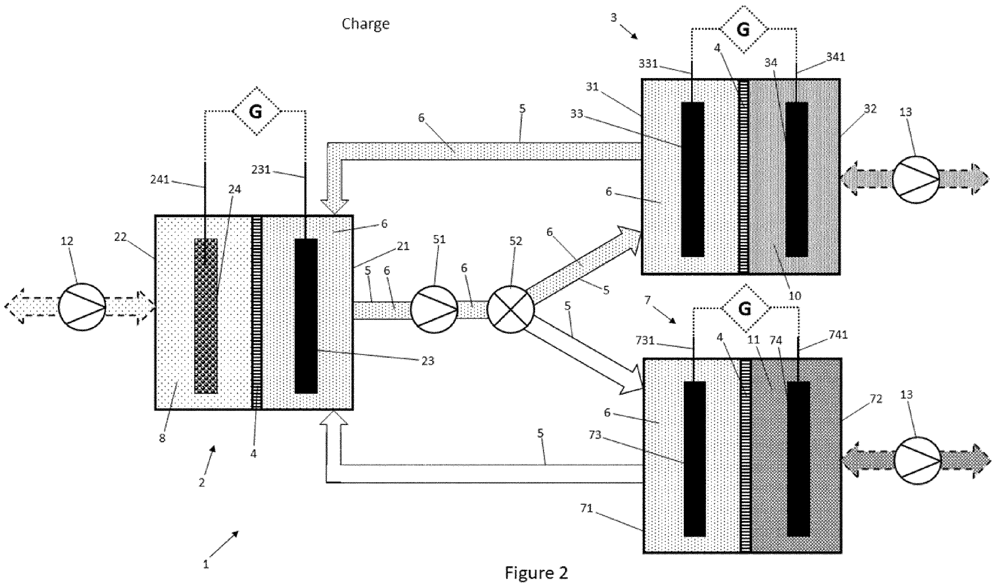

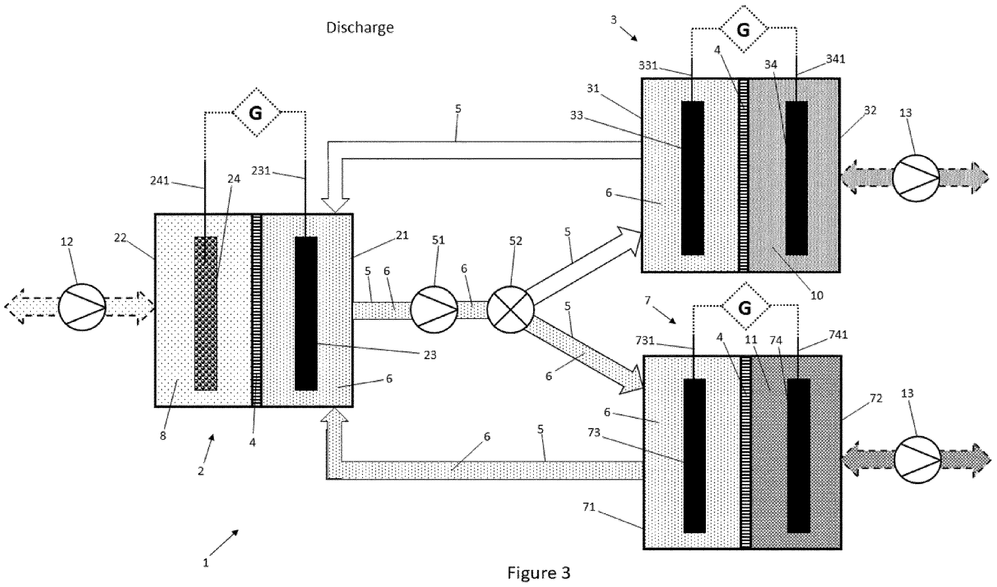

According to a second non-limiting embodiment illustrated FIGURES 2 and 3, the battery 1 comprises a first CEC 3 and a second CEC 7.

According to the second non-limiting embodiment:

- the electrode 34 of the second SEHC 32 of the first CEC 3 is arranged to oxidize the reduced state $B^g$ to the oxidized state $B^f$ of the at least one redox couple $B^f/B^g$, and/or

- the electrode 74 of the second SEHC 72 of the second CEC 7, is arranged to reduce the oxidized state $D^h$ to a reduced state D' of the at least one redox couple $D^h/D^i$.

According to the second embodiment, the electrode 34 of the SCEHC 32 of a first CEC 3 may be different from the electrode 74 of the SCEHC 72 of a second CEC 7.

In such a case, the at least one redox couple $B^f/B^g$ and the at least one redox couple $D^h/D^i$ may be or may comprise the same redox couple $B^f/B^g$, $D^h/D^i$ or $A^d/A^e$.

Preferably, in that case:

- the electrode 34 of the SCEHC 32 is especially arranged and involved in $B^f/B^g$, $D^h/D^i$ or $A^d/A^e$ reduction, that is, the reduction of $B^f$, $D^h$ or $A^d$, and/or

- the electrode 74 of the SCEHC 72 is especially involved in $B^f/B^g$, $D^h/D^i$ or $A^d/A^e$ oxidation, that is, the oxidation of $B^g$, D' or $A^e$.

According to the second non-limiting embodiment, during the charging, the at least one redox couple $B^f/B^g$ may be arranged to be oxidized, irreversibly, from the reduced state $B^g$ to the oxidized state $B^f$, according to formula 4':

$$B^g \rightarrow B^f + ne^- , \qquad \text{formula 4'.}$$

According to the second non-limiting embodiment, during the discharging, the at least one redox couple $D^h/D^i$ may be arranged to be reduced, irreversibly, from the oxidized state $D^h$ to a reduced state D', according to formula 5':

$$D^h + se^- \rightarrow D^i, \qquad \text{formula 5'.}$$

The second electrolytic media 8 may comprise one or more additives to limit or inhibit spontaneous reaction of the at least one redox couple $M^y/M^x$ with the second electrolytic media 8.

The first 6, the third 9, the fourth 10 and/or the fifth electrolytic media 11 may comprises one or more additives to limit or inhibit spontaneous reaction of the at least one redox couple $C^b/C^c$, $A^d/A^e$, $B^f/B^g$ and/or $D^h/D^i$ with their respective electrolytic media.

Using additive(s) is only an option for long-term storage. This option may be considered for long-term storage of energy, for instance for storage duration higher than 12 hours, 1 day or 10 days, in particular for storage duration higher than one month and particularly for storage duration higher than several months. The spontaneous or self-discharging is negligible for storage time lower than one month.

In case of long-term storage, by way of non-limiting examples, The battery 1 may comprise means 12:

- for instance liquid pumping means 12, arranged to remove and reintroduce the second electrolytic media 8 into SSEHC 22, and/or

- for instance gas pumping means 12, arranged to inject a gas, preferably an inert gas, for instance nitrogen, within the SSEHC 22 and/or within the second electrolytic media 8; and/or

the electrode 24 of the SSEHC 22 is arranged to be removed from, and preferably stored elsewhere, for instance in another compartment, for instance air-stored or stored in an inert gas (nitrogen for instance), and to be reintroduced into the SSEHC 22.

As for the additive(s), remove and reintroduce the second electrolytic media 8 into SSEHC 22 and/or injecting a gas within the SSEHC 22 and/or the electrode 24 from the SSEHC 22 is only an option. This option may be considered for long-term storage of energy, for instance for storage duration higher than 12 hours, 1 day or 10 days, in particular for storage duration higher than one month and particularly for storage duration higher than several months.

The Battery 1 may also comprise means 13:

- for instance liquid pumping means 13, arranged to remove and reintroduce the third 8, the fourth 10 and/or the fifth 11 electrolytic media into SCEHC 32, 72,

- for instance gas pumping means 13, arranged to inject a gas within the SCEHC 32, 72 and/or within the third 9, the fourth 10 and/or the fifth electrolytic media 11.

The gas injected by the means 13 may be a gas comprising, forming or consisting in an oxidation state (that is, a reduced state or an oxidized state) of at least one redox couple.

Preferably, the gas injected by the means 13 may be a gas comprising, forming or consisting in the reduced state or the oxidized state of the at least one redox couple $A^d/A^e$, $B^f/B^g$ and/or $D^h/D^i$.

For example, the electrolytic media 6, 8, 9, 10 and/or 11 comprise a salt or an electrolyte; the electrolyte may be, in whole or in part, the solvent and/or the electrolytic media. For instance, the electrolyte may be or may comprise: $Na^+$, $K^+$, $Li^+$, $Ca^{2+}$, $Mg^{2+}$, $Cl^-$, $F^-$, $SO_3^-$, $NO_3^-$, $CN^-$ and/or $CO_3^{2-}$.

According to formula 7, C may be or may comprise:

- $OH^-$ (when the solvent is water or a protic solvent) and/or a counterion (for instance $Na^+$, $K^+$, $Li^+$, $Ca^{2+}$, and/or $Mg^{2+}$), preferably when the pH is higher than or equal to 10,

- $H_3O^+$ (or $H^+$) (when the solvent is water or a protic solvent) and/or a counterion (for instance , $CO_3^{2-}$, $F^-$, $HCOO^-$, $SO_3^-$, $NO_3^-$, $CN^-$ and/or $Cl^-$...), preferably when the pH is lower than or equal to 4, and/or

- salts or electrolytes, preferably when pH is around 7, $Na^+$, $K^+$, $Li^+$, $Ca^{2+}$, $Mg^{2+}$, $Cl^-$, $F^-$, $HCOO^-$, $SO_3^-$, $NO_3^-$, $CN^-$, $CO_3^{2-}$.

C may comprise or may be a protic or aprotic solvent (preferably but not necessarily a protic solvent S and/or one or several of its conjugated forms $S^-$, $H^+$ or $SH^+$).

For instance, if the solvent is protic, the solvent S (and its conjugated forms) may be expressed as: $S \leftrightarrow S^- + H^+$ or $S + H^+ \leftrightarrow SH^+$ or $SH_q + H^+ \leftrightarrow (SH_{q+1})^+$.

Preferably, the battery 1, and/or the SEHC 22, the FSEHC 21, the SCEHC 32 and/or the FCEHC 31; is arranged so that a ratio between a charge capacity of the SSEHC 22 and a charge capacity of the FSEHC 21 is higher than or equal to 10.

This feature is enable by the specific arrangement of the battery 1 according to the invention. Thus, the volume, weight, costs (manufacturing and maintenance) of the battery 1 are significantly reduced.

Each electrode 23, 24, 33, 34, 73, 74 of the battery 1 is connected to a pole or terminal 231, 241, 331, 341, 731, 741 of the battery 1.

Each electrochemical cell 2, 3, 7 is intended to be connected, that is, each electrode pair of electrodes 23-24, 33-34, 73-74, to a power supply or an electric generator or a electric/power transformer or the like. The power supply is arranged to apply a potential equal or being slightly superior, that is few mV (for instance to 2, 5, 10, 20, 50 or 100 mV), to $|\Delta E_1|$ (for 22-33) and to $|\Delta E_3|$ (for 33-34 and/or 73-74).

The power supply is not part of the battery 1. The battery 1 is intended to be connected to power supply.

Thus, the electricity or the electrical energy to be stored is, partly, used:

- preferably during charging, to oxidize $A^e$ and $B^g$ and/or $D'$ and $C^c$ (in the FSEHC 21) and to reduce $M^y$ and $C^b$ (in the FCEHC 31),

- preferably during discharging, to oxidize $M^x$ and $C^c$ (in the FCEHC 31) and to reduce $C^b$ (in the FSEHC 21) and $A^d$ and $B^f$ and/or $D^h$.

Thus, the electricity or the electrical energy to be stored is mainly used, during charging, to inject a current at electrode 24 by applying a given voltage (i.e. a voltage higher than or preferably equal to $|\Delta E_1|$) between electrode 24 and 23 to reduce $M^y$ (in the SSEHC 22 at the electrode 24) and oxidized $C^c$ (in the FSEHC 21 at the electrode 23).

During the storage, a low $|\Delta E_1|$ according to the invention allows to significantly reduce the power demand for the energy storage.

Moreover, having a separated electrochemical cell dedicated for conversion, and/or having one half-electrochemical cell of CEC with high reactivity/spontaneous reactions (oxygen evolution reaction and oxygen reduction reaction) and the other half-electrochemical cell of the CEC with a redox flow, allows using highly reactive/spontaneous redox couples for conversion, and so to increase the efficiency of the conversion, without affecting the storage (i.e. with a low self-discharge).

The voltage $|\Delta E_3|$ is equal to the absolute potential difference between the redox potential $E(A^d/A^e)$ of the at least one couple $A^d/A^e$ (or $E(A^d/A^e)$ or $E(A^d/A^e)$), in a given or predetermined third electrolytic media 9 (or fourth 10 or fifth electrolytic media 11), and the redox potential $E(C^b/C^c)$ of the at least one couple $M^y/M^x$, in a given or predetermined first electrolytic media 8.

Thus, the overall voltage $|\Delta E_2| = |\Delta E_1| + |\Delta E_3|$.

By way of a non-limiting example, the at least one redox couple $C^b/C^c$ comprises or consists in quinone(s), such as anthraquinone(s), hydroquinone(s)/bezoquinone(s).

Preferably, in that case, in particular if the solvent comprises or consists in water, the pH of the first electrolytic media is comprised between 3 and 14. Thus, $E(C^b/C^c)$, wherein $Q^b$ is an oxidized state of the quinone(s) and $Q^c$ is a reduced of the quinone(s) ($Q^c$ may expressed as $Q^c H_n$) if the solvent is protic), is comprised between -0.1 V and 0.58 V (depending on the quinone) according to SHE.

As previously described, others couple redox couple $C^b/C^c$ may be used, for example: anthraquinone dérivatives (for example 1,2-Dihydroxyanthraquinone (2,6-DHAQ), 2,7-Dihydroxynaphthalene (2,7-DHN), Benzoquinone (BQ) / Hydroquinone (HQ), anthraquinone-2,6-disulfonic acid (AQDS)), phenazine derivatives (for example 7,8-dihydroxy-2-phenazinesulfonic acid), viologen derivatives, azo derivatives, alloxazines, flavin derivatives, tetrathiafulvalene, triphenylamine, and/or inorganic metal ions and complexes from vanadium , chrome, iron, zinc.

By way of example and not limitation, the at least one redox couple $A^d/A^e$ (and/or the at least one redox couple $B^f/B^g$ and/or $D^h/D^i$) comprises, preferably consists in, the redox couple $O_2/H_2O$ according to formula 6:

$$2H_2O \leftrightarrow O_2 + 4H^+ + 4\ e^-, \qquad \text{formula 6.}$$

In that case, the SCEHC 32, 72 of each CEC may be in gaseous connection with the atmosphere or the ambient air. The gaseous connection may be implemented by hole(s), pore(s) and/or aperture(s) in the wall of the SCEHC 32, 72. Thus, during dioxygen reduction, dioxygen of the atmosphere will diffuse (especially according to the Fick's law) in the fourth electrolytic media 10 and/ or in the fifth electrolytic media 11 (in particular to replace the dioxygen consumed or reacting at the electrode 34 or 74).

Alternatively or in combination, in that case, the gaseous connection may be implemented by the gas pumping means 13. In that case, the fourth electrolytic media 10 and/ or in the fifth electrolytic media 11 are saturated in dissolved gaseous dioxygen (that is, the concentration in gaseous dioxygen within the electrolytic media is not limited by diffusion).

Another part of the electricity or the electrical energy to be stored, during charging, is also used to inject a current at electrode 33 by applying a given voltage (i.e. a voltage higher than or preferably equal to $|\Delta E_3|$) between electrode 34 and 33 to reduce $C^b$ (in the FCEHC 31 at the electrode 33) and oxidized $A^e$ (in the SCEHC 32 at the electrode 34).

Hence, during the storage, further to have a low $|\Delta E_1|$, the arrangement of the battery 1 allows having one half-redox reaction to exhibit high reactivity (that is reactions limited by diffusion only (for instance, oxygen evolution according to the non-limiting embodiment)). Such an arrangement further enables to significantly reduce the energy demand for the storage.

Using the redox couple $O_2/H_2O$ also provide the advantage of using a redox couple having abundant and directly available oxidized and reduced states. Each of the oxidized state (plentifully available in air) and the reduced state (readily accessible) makes the conversion non-limiting.

When the electrolytic media (first 6, second 8, third 9, fourth 10 and/or fifth 11) comprises or consists in water (or the solvent of the electrolytic media comprises or consists in water), the oxygen evolution (that is, $2H_2O \rightarrow O_2 + 4H^+ + 4\ e^-$ or

$2OH^- \rightarrow \frac{1}{2}O_2 + H_2O + 2\ e^-$ ) or the reduction of oxygen (i.e. $O_2 + 4H^+ + 4e^- \rightarrow 2H_2O$ or

$\frac{1}{2}O_2 + H_2O + 2\ e^- \rightarrow 2OH^-$ ) involve water, hydronium ions and/or hydroxide ions generation depending on the pH of the aqueous electrolytic media.

By way of example and not limitation, the at least one redox couple $M^y/M^x$ comprises Iron (in particular in the form of an hydrate or a coordination complex) or consists in Iron as chemical element (in particular in the form of an hydrate or a coordination complex). In that case, the at least one redox couple $M^y/M^x$ may be expressed and/or comprises as, for instance:

$$Fe + 2OH^- \rightarrow [Fe(OH)_2]ads + 2e^-,$$

$$Fe + 2OH^- \rightarrow Fe(OH)_2 + 2e^-,$$

$$Fe(OH)_2 + OH^- \rightarrow FeOOH + H_2O + e^-,$$

$$3Fe(OH)_2 + OH^- \rightarrow Fe_3O_4.4H_2O + 2e^-,$$

$$FeOOH + H_2O + e^- \rightarrow Fe(OH)_2 + OH^-,$$

$$Fe_3O_4.4H_2O + 2e^- \rightarrow 3Fe(OH)_2 + 2OH^-,$$

$$Fe(OH)_2 + 2e^- \rightarrow Fe + 2OH^-,$$

$$[Fe(OH)_2]ads + 2e^- \rightarrow Fe + 2OH^-.$$

The arrangement of the battery 1 according to the invention, allows exhibiting a sufficient overall potential difference ($|\Delta E_2|$).

The invention is not restricted to embodiments described above and numerous adjustments may be made within the scope of the invention.

In addition, the different features, forms, variants and embodiments of the invention can be associated with each other in various combinations as long as they are not incompatible or exclusive of each other.

Thus, in variants that can be combined with each other of the previously described embodiments:

- the ion-exchange membrane 4 may be the same for each electrochemical cell or may be different from one electrochemical cell to another, and/or

- a considered ion-exchange membrane 4 is impermeable, at least or only, to the two at least one redox couples, that is, $C^b/C^c$, $A^d/A^e$, $B^f/B^g$ or $D^h/D^i$ of the electrolytic media, that is, the first 6, the third 9, the fourth 10 or the fifth 11 electrolytic media, intended to be in contact with the considered membrane, and/or

- one several or each of the electrolytic media, that is, the first 6, the second 8, the third 9, the fourth 10 and the fifth 11 electrolytic media, comprises or consists in a protic solvent, and/or

- the protic solvent may be or may comprise or may be a mixture of water, an alcool, a carboxylic acid, and/or

- the circulating means 5 arranged to circulate the first electrolytic media 6 may comprise, among others:

  • pipe(s) 5, rigid or flexible, and/or

  • liquid pumping means 51, and/or

  • a valve 52, for instance a bi-directional valve 52, and/or

- when the battery 1 comprises two CEC 3, 7, that is, a first CEC 3 and a second CEC 7, the battery 1 comprises:

  • the FCEHC 31 of the first CEC 3 and the SCEHC 32 of the first CEC 3, and

  • the FCEHC 71 of the second CEC 7 and the SCEHC 72 of the second CEC 7, and/or

- the circulating means 5, in particular the liquid pumping means 51 and/or the valve 52, may be arranged to set and/or modulated and/or adjusted the flow of the first electrolytic media 6, and/or

- the flow of the first electrolytic media 6 may be set and/or modulated and/or adjusted according to a charge level of the battery 1 and/or a ratio $\frac{M^x}{M^y}$ and/or according to the concentration of $C^b$ and/or the concentration of $C^c$ in the first electrolytic media 6, and/or

- each of the solvent of the electrolytic media 6, 8, 9, 10 and 11 may comprise or consist in water, and/or

- using a solvent comprising or consisting in water significantly decreases the risks, or eliminates the risks of fire, explosion..., and/or

- in case of long-term storage, by way of non-limiting examples, the means 12 may further comprise a sealed chamber, compartment or tank to store, temporarily, the second electrolytic media 8, and/or

- in case of long-term storage, and in the absence of the second electrolytic media 8 in the SSEHC 22, the SSEHC 22 may be kept filled with an inert gas (nitrogen for example) or may be kept at a pressure comprised between 1 and $1.10^5$ Pascals, preferably $1.10^3$ Pascals, more preferably $1.10^2$ Pascals, and/or

- when electrical energy release is needed, the inert gas is removed by the means 12, then the second electrolytic media 8 is reintroduced within the SSEHC 22, and/or

- the inert gas may be provided by external means or stored in a further tank connected to the means 5, 12 and/or 13.

**Claims**

1. Redox flow battery (1), said battery (1), comprising:

   - at least one electrochemical cell (3, 7), called CEC (3, 7) for conversion electrochemical cell (3, 7); each CEC comprises two electrochemical half-cells (31, 32) (71, 72), called CEHC for conversion electrochemical half-cells (31, 32) (71, 72),
   - a further electrochemical cell (2), called SEC for storage electrochemical cell (2); each SEC comprises two electrochemical half-cells (21, 22), called SEHC for storage electrochemical half-cells (21, 22),
   - an electrode (23, 24, 33, 34, 73, 74) disposed or arranged within each electrochemical half-cell,
   - an ion-exchange membrane (4) separating the two electrochemical half-cells of each electrochemical cell,
   - circulating means (5) arranged to circulate an electrolytic media (6), called first electrolytic media (6), intended to be received in the battery, through a first CEHC (31) of each CEC, called FCEHC (31), and through a first SEHC (21), called FSEHC (21) of the SEC,

   the electrode (24) of the second SEHC (22), called SSEHC (22), comprises at least one redox couple $M^y/M^x$ insoluble in a second electrolytic media (8) intended to be received in the SSEHC, said at least one redox couple $M^y/M^x$ being arranged to exhibit at least two oxidation states, namely $M^y$ and $M^x$, and being suitable to be reduced from an oxidized state $M^y$ to a reduced state $M^x$, and conversely, according to formula 1:
   $M^y + pe^- \leftrightarrow M^x$, formula 1, wherein x and y are oxidation number;
   the FSEHC is arranged to reduce an oxidized state $C^b$ to a reduced state $C^c$ of at least one redox couple $C^b/C^c$, and conversely, the at least one redox couple $C^b/C^c$ being comprised in the first electrolytic media intended to be received in the battery, said at least one redox couple $C^b/C^c$ comprises at least two oxidation states, namely $C^b$ and $C^c$, and being suitable to be reduced from an oxidized state $C^b$ to a reduced state $C^c$, and conversely, according to formula 2:
   $C^b + ne^- \leftrightarrow C^c$, formula 2, wherein b and c are oxidation number;
   an absolute potential difference $|\Delta E_1|$ between a redox potential $E(C^b/C^c)$ of the at least one couple $C^b/C^c$, in a given or predetermined first electrolytic media, and a redox potential $E(M^y/M^x)$ of the at least one couple $M^y/M^x$, in a given or predetermined second electrolytic media, is lower than or equal to 0.8 V.

2. Battery (1) according to claim 1, wherein the electrode (34, 74) of the second CEHC (32, 72) of each CEC, called SCEHC (32, 72), is arranged to reversibly oxidize and reduce at least one redox couple $A^d/A^e$, said at least one redox couple $A^d/A^e$ being comprised in a third electrolytic media (9), said third electrolytic media is intended to be in contact with said SCEHC;
   said at least one redox couple $A^d/A^e$ being arranged to exhibit at least two oxidation states, namely $A^d$ and $A^e$, and being suitable to be reduced from an oxidized state $A^d$ to a reduced state $A^e$, and conversely, according to formula 3:
   $A^d + oe^- \leftrightarrow A^e$, formula 3, wherein d and e are oxidation number.

3. Battery (1) according to claim 1, comprising two CEC (3, 7), and wherein:

   - the electrode (34) of the second SEHC (32) of a first CEC (3), called SCEHC (32), is arranged to oxidize a reduced state $B^g$ to an oxidized state $B^f$ of at least one redox couple $B^f/B^g$, said at least one redox couple $B^f/B^g$ being comprised in a fourth electrolytic media (10), said fourth electrolytic media is intended to be in contact with said electrode of the SCEHC (32) of the first CEC (3),
   - the electrode (74) of the second SEHC (72) of a second CEC (7), called SCEHC (72), is arranged to reduce an oxidized state $D^h$ to a reduced state D' of at least one redox couple $D^h/D^i$, said at least one redox couple $D^h/D^i$ being comprised in a fifth electrolytic media (11), said fifth electrolytic media is intended to be in contact with said electrode of the SCEHC (72) of the second CEC (7);

   said at least one redox couple $B^f/B^g$ being arranged to exhibit at least two oxidation states, namely $B^f$ and $B^g$, and being suitable to be oxidized from a reduced state $B^g$ to an oxidized state $B^f$, according to formula 4:
   $B^g \leftrightarrow B^f + re^-$, formula 4, wherein g and f are oxidation number;
   said at least one redox couple $D^h/D^i$ being arranged to exhibit at least two oxidation states, namely $D^h$ and D',
   and being suitable to be reduced from an oxidized state $D^h$ to a reduced state D', according to formula 5:
   $D^h + se^- \leftrightarrow D^i$, formula 5, wherein h and i are oxidation number.

4. Battery (1) according to:

- claim 2, wherein an absolute potential difference $|\Delta E_2|$ between a redox potential $E(A^d/A^e)$ of the at least one redox potential of the couple $A^d/A^e$, in its given or predetermined third electrolytic media (9), and a redox potential of the at least one couple $M^y/M^x$, in its given or predetermined second electrolytic media (8), is higher than or equal to 1 V, or

- claim 3, wherein an absolute potential difference $|\Delta E_2|$ between a redox potential $E(B^f/B^g)$ of the at least one redox potential of the couple $B^f/B^g$ and/or a redox potential $E(D^h/D^i)$ of the at least one redox potential of the couple $D^h/D^i$, in their respective given or predetermined fourth (10) and fifth (11) electrolytic media, and a redox potential of the at least one couple $M^y/M^x$, in its given or predetermined second electrolytic media (8), is higher than or equal to 1 V.

5. Battery (1) according to any of claim 2 or 4, wherein the at least one redox couple $A^d/A^e$ comprises the redox couple $O_2/H_2O$ according to formula 6:

$$2H_2O \leftrightarrow O_2 + 4H^+ + 4\ e^-, \qquad \text{formula 6.}$$

6. Battery (1) according to any of the preceding claims, wherein the electrode (34) of the SCEHC (32) of the first CEC (3) is different from the electrode (74) of the SCEHC (72) of the second CEC (7).

7. Battery (1) according to claim 3 or 4, or to claim 6 taken in combination with claim 3, wherein the at least one redox couple $B^f/B^g$ and the at least one redox couple $D^h/D^i$ comprised the redox couple $O_2/H_2O$ according to formula 6:

$$2H_2O \leftrightarrow O_2 + 4H^+ + 4\ e^-, \qquad \text{formula 6.}$$

8. Battery (1), according to claim 3, 4 or 7, or to claim 6 taken in combination with claim 3, wherein the at least one redox couple $B^f/B^g$ is different from the at least one redox couple $D^h/D^i$.

9. Battery (1), according to claim 3, 4, 7 or 8, or to claim 6 taken in combination with claim 3, wherein:

- the at least one redox couple $B^f/B^g$ is arranged to be irreversibly oxidize from a reduced state $B^g$ to an oxidized state $B^f$, according to formula 4':

$$B^g \rightarrow B^f + ne^-, \qquad \text{formula 4',}$$

- the at least one redox couple $D^h/D^i$ is arranged to be irreversibly reduce from an oxidized state $D^h$ to a reduced state D', according to formula 5':

$$D^h + ne^- \rightarrow D^i, \qquad \text{formula 5'.}$$

10. Battery (1) according to:

- any of the any of the preceding claims, wherein the first electrolytic media (6) and/or the second electrolytic media (8) comprises a protic solvent,
- claim 2, or to claim 4, 5 or 6 taken in combination with claim 2, wherein the third electrolytic media (9) comprises a protic solvent,
- claim 3, or to claim 4, 6, 7, 8 or 9 taken in combination with claim 3, wherein the fourth electrolytic media (10) and/or the fifth electrolytic media (11) comprises a protic solvent.

11. Battery (1) according to any of the preceding claims, wherein the second electrolytic media (8) comprises one or more additives to limit or inhibit spontaneous reaction of the at least one redox couple $M^y/M^x$ with the second electrolytic media, and/or

12. Battery (1) according to any of the preceding claims, comprising:

- means (12) arranged to remove and reintroduce the second electrolytic media (8) into SSEHC (22), and/or
- the electrode (24) of the SSEHC (22) is arranged to be removed from and to be reintroduced into the SSEHC (22).

13. Battery (1) according to any of the preceding claims, wherein a ratio between a charge capacity of the SSEHC (22) and a charge capacity of the FSEHC (21) is higher than or equal to 10.

14. Method for electrical energy storage in a redox flow battery (1), said method, comprising the steps consisting in:

- circulating an electrolytic media (6), through circulated means (5), called first electrolytic media (6):

   • through a first conversion electrochemical half-cells (31), called FCEHC (31), of each electrochemical cells of at least one conversion electrochemical cell (3), called CEC (3) for conversion electrochemical cell (3), and
   • through a first storage electrochemical half-cells (21), called FSEHC (21), of a further electrochemical cell (2), called SEC (2) for storage electrochemical cell (2),

- reducing an oxidized state $M^y$, of at least one redox couple $M^y/M^x$ comprising at least two oxidation states, namely $M^y$ and $M^x$, and oxidizing a reduced state $M^x$ of the least one redox couple $M^y/M^x$, and conversely, according to formula 1:

   $M^y + pe^- \leftrightarrow M^x$, formula 1, wherein x and y are oxidation number;
   said at least one couple $M^y/M^x$ being comprised in an electrode (24) of the second storage electrochemical half-cells (22), called SEHC (22);

- oxidizing a reduced state $C^c$, of at least one redox couple $C^b/C^c$ comprising at least two oxidation states, namely $C^b$ and $C^c$, and reducing an oxidized state $C^b$ of the least one redox couple $C^b/C^c$, and conversely, according to formula 2:

   $C^b + ne^- \leftrightarrow C^c$, formula 2, wherein b and c are oxidation number;
   said at least one redox couple $C^b/C^c$ being comprised in the first electrolytic media;
   an absolute potential difference $|\Delta E_1|$ between a redox potential of the couple $C^b/C^c$, in a given or predetermined first electrolytic media, and a redox potential of the at least one couple $M^y/M^x$, in a given or predetermined second electrolytic media, is lower than or equal to 0.8 V.

15. Method according to the preceding claim, comprising:

   - a step of charging the battery (1) comprises:

      • reducing the oxidized state $M^y$ of the at least one redox couple $M^y/M^x$ into the reduced state $M^x$, and
      • oxidizing the reduced state $C^c$ of the at least one redox couple $C^b/C^c$ into the oxidized state $C^b$,

   - a step of discharging the battery (1) comprises:

      • oxidizing the reduced state $M^x$ of the at least one redox couple $M^y/M^x$ into the oxidized state $M^y$, and
      • reducing the oxidized state $C^b$ of the at least one redox couple $C^b/C^c$ into the reduced state $C^c$.

Figure 1

Charge

Figure 2

Discharge

Figure 3

Europäisches
Patentamt
European
Patent Office
Office européen
des brevets

## EUROPEAN SEARCH REPORT

**Application Number**

EP 24 30 6715

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 605 696 A2 (UNITED TECHNOLOGIES CORP [US]) 5 February 2020 (2020-02-05) | 1,2,14, 15 | INV. H01M8/04186 H01M8/18 H01M8/20 |
| A | * paragraphs [0001] - [0050]; figures 1-4 * | 3-13 | |
| | ----- | | |
| X | WO 94/09526 A1 (NAT POWER PLC [GB]; ZITO RALPH [US]) 28 April 1994 (1994-04-28) | 1,2,14, 15 | |
| A | * pages 1-10; figures 1-3 * | 3-13 | |
| | ----- | | |
| X | WO 94/09525 A1 (NAT POWER PLC [GB]; ZITO RALPH [US]) 28 April 1994 (1994-04-28) | 1,2,14, 15 | |
| A | * pages 1-10; figures 1-2 * | 3-13 | |
| | ----- | | |
| A | US 2019/165403 A1 (BRUCE DAVID ROBERT [CA] ET AL) 30 May 2019 (2019-05-30) * the whole document * | 1-15 | |
| | ----- | | |
| A | US 2023/197998 A1 (BRUCE DAVID ROBERT [CA] ET AL) 22 June 2023 (2023-06-22) * the whole document * | 1-15 | |
| | ----- | | **TECHNICAL FIELDS SEARCHED (IPC)** |
| A | DE 41 29 567 A1 (HOFMANN UDO DR ING [DE]) 11 March 1993 (1993-03-11) * the whole document * | 1-15 | H01M |
| | ----- | | |

The present search report has been drawn up for all claims

| Place of search | Date of completion of the search | Examiner |
|---|---|---|
| Munich | 20 March 2025 | Kennouche, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6715

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | | Publication date | Patent family member(s) | | Publication date |
|---|---|---|---|---|---|
| EP 3605696 | A2 | 05-02-2020 | DK | 3605696 T3 | 31-01-2022 |
| | | | EP | 3605696 A2 | 05-02-2020 |
| | | | JP | 7201552 B2 | 10-01-2023 |
| | | | JP | 2020021732 A | 06-02-2020 |
| | | | US | 2020044267 A1 | 06-02-2020 |
| | | | US | 2021328241 A1 | 21-10-2021 |
| WO 9409526 | A1 | 28-04-1994 | AT | E162338 T1 | 15-01-1998 |
| | | | AU | 676691 B2 | 20-03-1997 |
| | | | CN | 1087752 A | 08-06-1994 |
| | | | DE | 69316387 T2 | 28-05-1998 |
| | | | DK | 0664932 T3 | 14-09-1998 |
| | | | DZ | 1722 A1 | 17-02-2002 |
| | | | EG | 20201 A | 30-10-1997 |
| | | | EP | 0664932 A1 | 02-08-1995 |
| | | | ES | 2111774 T3 | 16-03-1998 |
| | | | GR | 3026051 T3 | 29-05-1998 |
| | | | HK | 1007461 A1 | 09-04-1999 |
| | | | IL | 107237 A | 14-05-1996 |
| | | | JP | 3452358 B2 | 29-09-2003 |
| | | | JP | H08502388 A | 12-03-1996 |
| | | | MY | 110158 A | 28-02-1998 |
| | | | TW | 241399 B | 21-02-1995 |
| | | | US | 5496659 A | 05-03-1996 |
| | | | WO | 9409526 A1 | 28-04-1994 |
| | | | ZA | 937284 B | 30-03-1995 |
| WO 9409525 | A1 | 28-04-1994 | AT | E152860 T1 | 15-05-1997 |
| | | | AU | 672049 B2 | 19-09-1996 |
| | | | DE | 69310529 T2 | 06-11-1997 |
| | | | DK | 0664931 T3 | 08-12-1997 |
| | | | EP | 0664931 A1 | 02-08-1995 |
| | | | ES | 2104179 T3 | 01-10-1997 |
| | | | GR | 3024385 T3 | 28-11-1997 |
| | | | JP | H08502387 A | 12-03-1996 |
| | | | WO | 9409525 A1 | 28-04-1994 |
| US 2019165403 | A1 | 30-05-2019 | CA | 3031431 A1 | 01-02-2018 |
| | | | EP | 3491694 A1 | 05-06-2019 |
| | | | US | 2019165403 A1 | 30-05-2019 |
| | | | US | 2021376368 A1 | 02-12-2021 |
| | | | WO | 2018018145 A1 | 01-02-2018 |
| US 2023197998 | A1 | 22-06-2023 | NONE | | |
| DE 4129567 | A1 | 11-03-1993 | NONE | | |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 6715

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | Publication date |
|---|---|---|---|